# FASCICULE DE BREVET EUROPEEN

(11) **EP 2 189 087 B1**
(45) Date de publication et mention de la délivrance du brevet: **05.03.2014**
(21) Numéro de dépôt: 10154889.9
(22) Date de dépôt: 16.06.2006
(51) Int. Cl.: A47J 31/44

(54) **Dispositif de distribution de boissons avec système de support et de récupération de gouttes pour récipients de différentes tailles**
Getränkeautomat mit Auflagesystem und Tropffänger für Behälter verschiedener Größen
Beverage distribution apparatus with support system and droplet recuperation for containers with different sizes

(43) Date de publication de la demande: 26.05.2010
(62) Demande divisionnaire de: 06115568.5
(73) Titulaire: Nestec S.A., 1800 Vevey (CH)
(72) Inventeur: Cahen, Antoine, 1005 Lausanne (CH); Cahen, Philippe, 1005 Lausanne (CH); Boussemart, Christophe S., 74500 Lugrin (FR)
(74) Mandataire: Schnyder, Frank Simon

(56) Documents cités:
- EP-A2- 0 549 887
- CH-A- 487 636
- US-A- 5 161 455
- US-A- 5 353 692

## Description

La présente invention se rapporte à un dispositif de distribution de boissons, telle qu'une machine à café, disposant d'un système de récupération de gouttes adapté pour récipients de différentes tailles.

Il existe une demande des consommateurs pour des machines de distribution de boissons, telles que des machines à café, qui puissent délivrer différentes boissons dans des récipients de différentes tailles, notamment des machines du type divulgué dans le brevet US 5,161,455. Par exemple, il existe des machines à café permettant de préparer un café espresso ou long dans une petite ou moyenne tasse et un café "macchiato" dans un grand verre.

Par ailleurs, il est important de maintenir une faible distance entre la sortie de boisson et le récipient de façon à garantir une bonne qualité de crème ("crema") pour un café et d'autre part éviter les risques de projections. Il faut donc un système qui empêche à l'utilisateur de faire d'erreur par rapport au support utilisé et dans la bonne distance entre la sortie de la boisson et le recipient.

Par ailleurs, il est aussi important de proposer un système de récupération des gouttes qui soit efficace afin de garantir une certaine propreté dans la zone de service.

Il est aussi important de proposer un système qui soit facile d'utilisation et sans complexité technique.

Il faut aussi que le système puisse être d'une maintenance aisée.

Les dispositifs existants dans l'art antérieur ne répondent correctement pas à ces objets.

Certains dispositifs sont formés de plusieurs éléments de support placés en superposition. L'utilisateur doit manipuler un ou plusieurs des ces éléments pour pouvoir correctement adapter le support à la taille du récipient voulu avec le risque de renverser le liquide collecté. Il y aussi le risque pour l'utilisateur de ne pas respecter la bonne distance sortie-récipient en fonction de la boisson distribuée. Par exemple, il peut être amené à utiliser un support trop bas pour un café servi dans une tasse.

La présente invention vise à proposer une solution qui répond aux exigences précitées et résout les inconvénients de l'art antérieur.

Pour cela, l'invention concerne un dispositif pour la préparation de boissons, telle qu'une machine à café. Le dispositif comprend une embase, une sortie de boisson et un système de support et de récupération de gouttes. Le système comprend un élément de support positionnable sous la sortie de boisson pour recevoir un récipient de relativement petite taille. Selon un aspect de l'invention, l'élement de support est mobile selon une position déployée de support adaptée pour recevoir un récipient de petite taille et une position au moins partiellement repoussée dans laquelle l'élément est repoussé de façon à libérer un espace libre vers le bas permettant de positionner un second récipient de plus grande taille, à la place du premier récipient, sous la sortie de boisson.

L'élément de support de tasse est de préférence agencé en surplomb relativement à l'embase en position déployée d'une boisson dans le récipient de petite taille et est arrangé pour pouvoir être repoussé de façon à libérer un espace permettant de positionner un récipient de plus grande taille sous la sortie de boisson.

De préférence, l'élément de support est placé en surplomb à une distance verticale prédéterminée par rapport au plan inférieur de l'embase. Par exemple, la distance est telle qu'un récipient de petite taille ne peut pas repousser l'élément de support suffisamment alors qu'un récipient de grande taille est capable de repousser ledit élément.

Ainsi, selon le concept inventif, le moyen de support et de collecte utilisé pour le récipient de petite taille (par exemple, une tasse) est repoussé simplement lorsqu'un récipient de grande taille est utilisé. Il peut ainsi être repoussé par le récipient lui-même, par exemple, un grand verre. On garantit aussi par ce principe une distance optimale pour délivrer la boisson notamment en évitant tout risque de confusion dans le contrôle du positionnement du récipient sous la sortie de boisson.

Selon un mode possible, l'élément de support est déplaçable en rotation. Il est préférablement repoussé en rotation vers le haut lors du placement d'un récipient de hauteur suffisante qui peut prendre appui contre l'élément et le maintenir ainsi en position repoussée. Par exemple, l'élément de support est articulé solidairement au dispositif par un axe de rotation sensiblement horizontal permettant de repousser ledit élément vers le haut.

De préférence, l'élément de support est agencé en articulation sur le dispositif de façon à pouvoir être repoussé au moins partiellement lors du positionnement d'un récipient de plus grande taille et à retomber par gravité sous la sortie de boisson au moment ou l'utilisateur enlève ledit récipient. Ainsi, les dernières gouttes provenant de la sortie de boisson peuvent être récupérées par l'élément de support lui-même au moment ou l'utilisateur enlève le récipient de grande taille de la zone de service.

Selon un autre aspect possible, le système comprend un bac collecteur de liquide lequel est disposé pour recevoir le liquide récupéré par l'élément de support au moment où celui-ci est positionné en position repoussée. Ainsi, l'élément de support peut être vidé régulièrement; ce qui diminue les risques de débordement de liquide, améliore la propreté du dispositif et réduit les problèmes d'hygiène.

Selon une construction préférentielle, l'élément de support et le bac collecteur sont solidaires pour former un tiroir lequel est amovible par rapport à l'embase. Dans ce cas, l'élément de support peut être articulé de manière amovible sur le bac collecteur lui-même ou toute autre pièce solidaire du tiroir. Ce concept modulaire de tiroir rend la maintenance plus aisée et permet un nettoyage de l'ensemble du système de support et de collecte.

Le dispositif de l'invention peut aussi comprendre un dispositif de verrouillage de l'élément de support en position entièrement repoussée. Le dispositif de verrouillage peut être arrangé de façon à libérer automatiquement l'élément de support en position déployée. Une fois libéré par le dispositif de verrouillage, l'élément de support peut retomber, par exemple, par gravité en position déployée. Un verrouillage peut être utile notamment pour effectuer la maintenance et/ou lorsque le dispositif n'est pas été utilisé de façon à réduire son encombrement. La remise en place de l'élément de support peut être automatique, c'est à dire ne nécessitant pas de manipulations du support lui-même. De la sorte, le risque est réduit de pouvoir alors placer un récipient de petite taille alors que l'élément est encore verrouillé en position relevée ou repoussée.

Selon un mode préférentiel, les moyens de verrouillage sont contrôlés par le moyen de mise sous tension "marche/arrêt" du dispositif. Plus précisément, lorsque le dispositif est mis sous tension par le bouton de mise en marche, la pression exercée sur le bouton entraîne un déverrouillage des moyens de verrouillage. Le contrôle du bouton sur les moyens de verrouillage peut être de nature mécanique, électromagnétique et/ou électrique par exemple.

L'invention n'est pas nécessairement limitée à un élément de support agencé en rotation. On peut prévoir aussi un mode de réalisation dans lequel l'élément est repoussé par d'autres moyens tel que par glissement à la manière d'un tiroir dans un logement du dispositif.

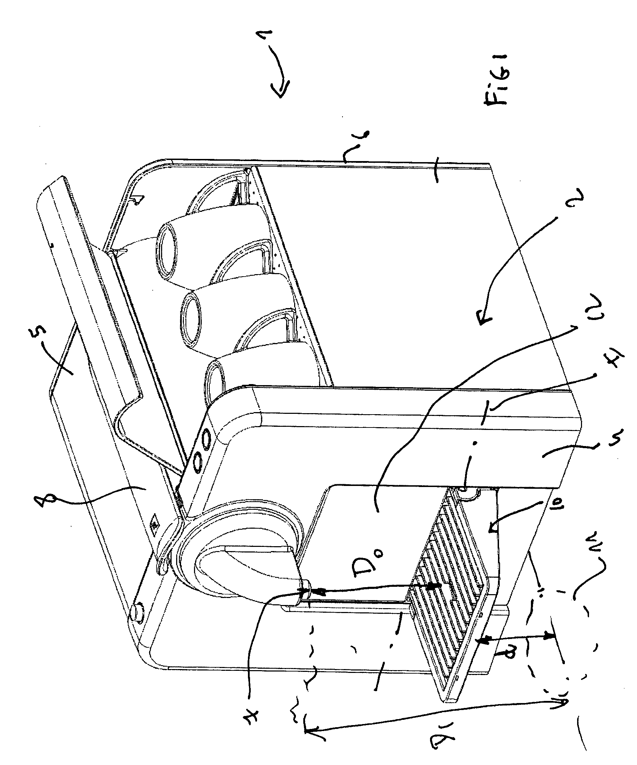

La figure 1 représente en vue en perspective un dispositif selon l'invention;
La figure 2 montre un détail du système de support et de récupération selon l'invention en vue éclatée;
La figure 3 montre un détail du système de support et de récupération selon l'invention en assemblage sous forme de tiroir;
La figure 4 représente une vue de détail en perspective d'une partie du dispositif dans lequel le système de support et de récupération de gouttes est en position verrouillée;
La figure 5 représente une vue de détail d'une partie du dispositif avec le système déployée pour recevoir des récipients de petite ou moyenne tailles.

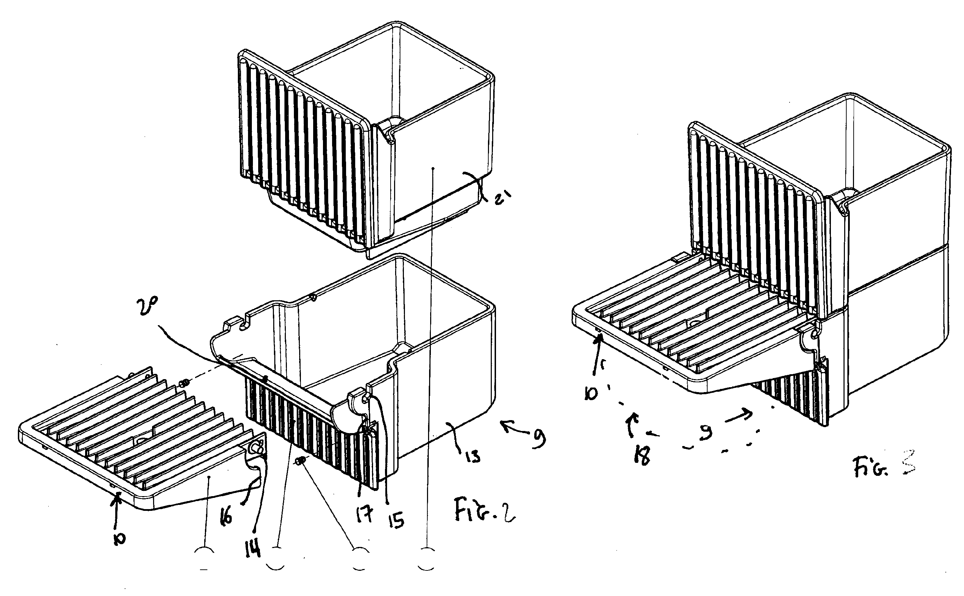

Par référence aux figures, le dispositif pour la préparation de boisson porte la référence 1 et sera appelé par simplification "machine à café" dans la suite de la description. La machine à café selon l'invention comprend une embase 2 pouvant recouvrir un ensemble de pièces assemblées comme une ossature interne 3 (illustrée aux figures 2-3) sur laquelle sont adaptés différents panneaux externes 4, 5, 6. La machine comprend une sortie de boisson 7 laquelle peut prendre différentes formes. La machine comprend par exemple aussi des moyens 8 de fermeture du module d'extraction ou de percolation.

La technique d'extraction ou de dilution n'étant pas l'objet de l'invention, il n'est pas nécessaire de décrire celle-ci. Pour exemple seulement, la machine peut comprendre en interne un module d'extraction servant à extraire, dissoudre et/ou diluer l'ingrédient alimentaire sous pression et le délivrer au travers de la sortie de boisson. L'ingrédient alimentaire est de préférence contenu dans un emballage fermé tel qu'une capsule, un sachet ou tout autre emballage adapté pour la machine.

Le dispositif selon l'invention comprend un système de support de récipient et de collecte ou récupération des gouttes 9. Le système est formé d'un élément de support 10 qui se positionne sous la sortie de boisson et en surplomb de la machine. Par positionnement en "surplomb", il faut entendre que l'élément de support prolonge le dispositif dans au moins une direction et n'est pas supportée par dessous de façon à former ainsi une sorte de balcon. L'élément de support est placé à une distance D par rapport à la sortie de boisson prédéfinie de façon à optimiser la distance d'écoulement lors de la réception de récipients de petites ou moyennes tailles (c'est à dire, par exemple, des tasses pouvant contenir respectivement environ 25, 40 ou 110 mL). Aussi, l'élément est distant d'une distance "d" de la surface de placement 11 pour le positionnement d'un récipient de plus grande taille lorsque l'élément est repoussé par le récipient. La surface de placement ou support du récipient peut être virtuelle, c'est à dire, simplement celle d'une table de cuisine ou autre surface ne faisant pas partie de la machine elle-même ou encore "réelle, c'est-à-dire, faire partie d'une surface de support de la machine elle-même. Toutefois, l'invention trouve un intérêt dans la simplification de la machine et donc il n'est pas nécessaire de prévoir un support spécifique pour le récipient de grande taille (ci-après dénommé "grand verre") comme il sera expliqué plus loin.

L'élément de support 10 est ainsi déplaçable librement en rotation selon un axe de rotation I relativement à l'embase. L'élément peut se trouver en position repoussée vers le haut ou "relevé", dans ce cas, il permet le positionnement d'un grand verre. Le grand verre repousse simplement l'élément de support qui se relève. Le relèvement peut être partiel de sorte que l'élément ne soit pas entièrement logé dans le logement 12 prévu dans l'embase. La sortie de boisson 7 est aussi prévue de sorte que la distance D1 entre la sortie et la surface de placement 11 soit optimale pour un grand verre, de façon à limiter notamment les risques d'éclaboussures et permettre un écoulement rapproché qui ne nuit pas à la mousse en formation ou déjà formée dans le verre.

Les figures 2 et 3 montrent le système de support et de collecte 9 en tant que tel. Le système se présente sous la forme d'un ensemble-tiroir. Un premier bac collecteur 13 est prévu pour récupérer le liquide provenant de l'élément de support 10. L'élément de support est articulé de manière amovible sur les faces latérales du bac collecteur 13 par des ergots 14 se rapportant dans des lumières 15 des faces. L'élément de support comprend sur les côtés des surfaces d'appui 16 placées en dessous de l'axe de rotation, de manière à s'engager en appui contre des surfaces avant 17 du bac. De la sorte, l'élément de support est maintenu en surplomb tout en libérant un espace 18 sous l'élément. L'élément de support offre un support solide pour la dépose d'une tasse de petite/moyenne contenance. Sur l'avant, le bac d'écoulement peut être muni d'une goulotte 20 qui s'avance sous l'élément de support et assure ainsi une meilleure récupération du liquide.

Un second bac de récupération 21 pour les capsules de café peut s'emboîter sur le premier bac collecteur 13. Une fois installé dans la machine, le bac 21 est agencé pour récupérer les capsules usagées éjectées par le module d'extraction.

Le système de support et de collecte 9 selon l'invention forme un seul bloc modulaire qui peut être facilement désengagé de l'embase par simple glissement, par exemple, rendant ainsi plus aisé la maintenance, à savoir, la vidange à la fois du liquide et des capsules usagées et le nettoyage des bacs.

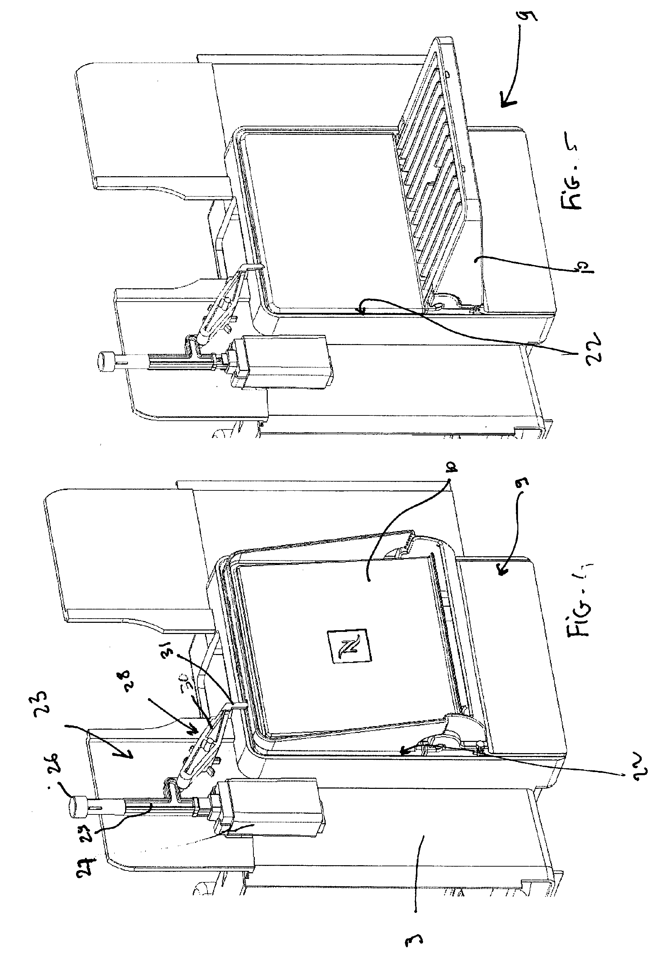

Comme le montrent les figures 4 et 5, le système de support et de collecte 9 s'engage en glissement dans un logement 22 de l'embase de la machine. Une fois en place, le système est alors fonctionnellement et esthétiquement intégré au reste de la machine.

La machine comprend aussi préférentiellement un dispositif de verrouillage 23 permettant de verrouiller l'élément de support 10 dans une position entièrement rétractée ou repoussée, comme par exemple, en partie au moins dans le logement 22. Tout moyen de verrouillage est envisageable comme des moyens mécaniques ou à électro-aimants. Selon un mode préférentiel, le dispositif de verrouillage comprend des moyens de verrouillage qui sont associés à un moyen de contrôle. Le moyen de contrôle agit sur les moyens de verrouillage pour libérer sélectivement l'élément de support. L'élément de support est alors libéré en rotation jusqu'à sa position déployée (figure 5).

Le moyen de contrôle inclut préférentiellement le bouton marche/arrêt 26 de la machine permettant de mettre la machine sous tension. Ce moyen est comme connu en soi associé à un interrupteur électrique 27 permettant d'alimenter sélectivement les composants électriques et électroniques de la machine (chauffe-eau, pompe, contrôle électronique, etc.). Dans ce cas particulier, le bouton marche/arrêt 26 est relié mécaniquement à un verrou 28 formé, par exemple, par un poussoir mécanique 29 qui active une bascule 30 solidaire d'un doigt de retenue 31 agissant en retenue sur le bord avant de l'élément de support 10. L'élément de bascule 30 peut être associé à des moyens élastiques (par exemple, un ressort) afin de prévoir le retour automatique du doigt en position de verrouillage après suppression de la pression sur le bouton marche/arrêt comme le montre la figure 5.

L'avantage d'associer le verrouillage de l'élément de support en position rétractée au contrôle marche/arrêt est d'éviter la situation permettant à l'utilisateur de préparer une boisson dans un récipient de petite taille lorsque l'élément de support est verrouillé. Lorsque l'utilisateur veut préparer un café dans une tasse, par exemple, par opposition à un grand verre, il doit d'abord appuyer sur le bouton marche/arrêt; ce qui active le verrou en ouverture et libère l'élément de support. A contrario, s'il veut préparer une boisson dans une grande tasse, il lui suffit de repousser partiellement l'élément de support 10 en rotation vers le haut au moyen du grand verre.

## Revendications

1. Dispositif (1) pour la préparation de boissons comprenant une embase (2) et un système (9) de support et de récupération de gouttes lequel comprend un bac (13) collecteur un élément de support (10) positionnable sous une sortie de boisson (7) pour recevoir un premier récipient de relativement petite taille, l'élément de support étant mobile entre une position déployée de support adaptée pour recevoir un récipient de petite taille et une position au moins partiellement repoussée dans laquelle l'élément est repoussé de façon à libérer un espace libre permettant de positionner un second récipient de plus grande taille, à la place du premier récipient, sous la sortie de boisson (7), **caractérisé en ce que** le bac (13) est arrangé pour récupérer du liquide de la sortie boisson (7) en raison de la récupération dudit liquide par l'élément de support mobile (10) en position déployée, de sorte à ce que ledit liquide de la sortie boisson récupéré par le bac (13) provienne de l'élément de support (10).

2. Dispositif selon la revendication 1, **caractérisé en ce que** l'élément de support (10) est placé en surplomb par rapport à l'embase (2) en position déployée de support du premier récipient, l'élément de support (10) comprenant en particulier une surface d'appui (16) destinées à fournir un appui pour maintenir l'élément de support en position déployée en surplomb.

3. Dispositif selon la revendication 1 ou 2, **caractérisé en ce que** l'élément de support (10) est déplaçable en rotation entre la position déployée et la position repoussée.

4. Dispositif selon la revendication 3, **caractérisé en ce que** l'élément de support (10) est articulé selon un axe de rotation permettant de repousser ledit élément vers le haut.

5. Dispositif selon la revendication 4, **caractérisé en ce que** l'élément de support (10) comprend sur les côtés des surfaces d'appui (16) placés en dessous de l'axe de rotation, de manière à s'engager en appui contre les surfaces avant (17) du bac (13).

6. Dispositif selon l'une quelconque des revendications précédentes, **caractérisé en ce que** l'élément de support (10) est agencé en articulation de façon à pouvoir être repoussé au moins partiellement lors du positionnement d'un récipient de plus grande hauteur et à retomber par gravité sous la sortie de boisson au moment ou l'utilisateur enlève ledit récipient.

7. Dispositif selon l'une quelconque des revendications précédentes, **caractérisé en ce que** l'élément de support (10) est articulé de manière amovible sur des faces latérales du bac collecteur (13) par des ergots (14) se rapportant dans des lumières (15) desdites faces.

8. Dispositif selon l'une quelconque des revendications précédents, **caractérisé en ce que** le bac de récupération (13) est muni d'une goulotte (20) s'avançant sous l'élément de support (10) pour la récupération de liquide.

9. Dispositif selon l'une quelconque des revendications précédentes, **caractérisé en ce que** le bac collecteur de liquide (13) est disposé pour recevoir le liquide récupéré par l'élément de support (10) au moment où celui-ci est positionné en position déployée.

10. Dispositif selon la revendication 9, **caractérisé en ce que** l'élément de support (10) et le bac collecteur (13) sont solidaires pour former un tiroir lequel est amovible par rapport à l'embase (2), en particulier par glissement.

11. Dispositif selon l'une quelconque des revendications précédentes, qui comprend un second bac (21) pour récupérer des capsules de café, le second bac pouvant être emboîté sur le premier bac (13) collecteur de liquide.

12. Dispositif selon l'une quelconque des revendications précédentes, **caractérisé en ce que** la position repoussée vers le haut de l'élément de support (10) est extérieure à l'embase (2).

13. Dispositif (1) selon l'une quelconque des revendications précédentes, **caractérisé en ce qu'**il est configuré de sorte à pourvoir être placé sur une surface de support, telle qu'une surface de table de cuisine, comprenant une surface de placement (11) délimitant ledit espace libre permettant de positionner ledit second récipient.

14. Dispositif selon l'une quelconque des revendications précédentes, **caractérisé en ce qu'**il comprend un dispositif de verrouillage (23) de l'élément de support (10) en position entièrement repoussée, en particulier un dispositif de verrouillage (23) arrangé de façon à libérer automatiquement l'élément de support (10) en position déployée et/ou arrangé de façon à verrouiller l'élément de support (10) en position repoussée de manière à ce que l'élément de support retombe par gravité en position déployée une fois libéré par le dispositif de verrouillage (23) et/ou arrangé pour être contrôlé par un moyen de marche/arrêt (26).

15. Dispositif selon l'une quelconque des revendications précédentes, **caractérisé en ce que** l'élément de support (10) est déplacé le long ou dans un logement (22) de la base (2), en particulier un logement dans lequel l'élément de support est inséré par glissement.

## Patentansprüche

1. Vorrichtung (1) zur Zubereitung von Getränken, umfassend ein Gehäuse (2) und ein Stütz- und Tropfenauffangsystem (9), welches ein Auffangbehältnis (13) und ein unter einem Getränkeauslass (7) positionierbares Stützelement (10) zur Aufnahme eines ersten Behälters von relativ geringer Größe aufweist, wobei das Stützelement bewegbar ist zwischen einer ausgefahrenen Stützposition, die zur Aufnahme eines Behälters von geringer Größe geeignet ist, und einer mindestens teilweise zurückgeschobenen Position, in der das Element derart zurückgeschoben ist, dass ein Freiraum entsteht, der es erlaubt, anstelle des ersten Behälters einen zweiten, größeren Behälter unter dem Getränkeauslass (7) zu positionieren, **dadurch gekennzeichnet, dass** das Behältnis (13) dazu ausgelegt ist, Flüssigkeit des Getränkeauslasses (7) aufgrund des Auffangens der Flüssigkeit durch das bewegbare Stützelement (10) in ausgefahrener Position aufzufangen, so dass die vom Behältnis (13) aufgefangene Flüssigkeit des Getränkeauslasses vom Stützelement (10) stammt.

2. Vorrichtung nach Anspruch 1, **dadurch gekennzeichnet, dass** in der ausgefahrenen Stützposition für den ersten Behälter das Stützelement (10) im Verhältnis zum Gehäuse (2) überhängend angeordnet ist, wobei das Stützelement (10) insbesondere eine Auflagefläche (16) umfasst, die zur Bereitstellung einer Auflage ausgebildet ist, um das Stützelement in ausgefahrener überhängender Position zu halten.

3. Vorrichtung nach Anspruch 1 oder 2, **dadurch gekennzeichnet, dass** das Stützelement (10) zwischen der ausgefahrenen Position und der zurückgeschobenen Position drehbar beweglich ist.

4. Vorrichtung nach Anspruch 3, **dadurch gekennzeichnet, dass** das Stützelement (10) gemäß einer Drehachse, die ein Zurückschieben des besagten Elements (10) nach oben ermöglicht, angelenkt ist.

5. Vorrichtung nach Anspruch 4, **dadurch gekennzeichnet, dass** das Stützelement (10) seitlich Auflageflächen (16) aufweist, die unterhalb der Drehachse angeordnet sind, um in Anlage an die vorderen Flächen (17) des Behältnisses (13) zu kommen.

6. Vorrichtung nach einem der vorherigen Ansprüche, **dadurch gekennzeichnet, dass** das Stützelement (10) derart gelenkig angeordnet ist, dass es beim Positionieren eines höheren Behälters mindestens teilweise zurückgeschoben werden kann und sobald der Benutzer den besagten Behälter entfernt, durch Schwerkraft wieder unter den Getränkeauslass fällt.

7. Vorrichtung nach einem der vorherigen Ansprüche, **dadurch gekennzeichnet, dass** das Stützelement (10) auf seitlichen Flächen des Auffangbehältnisses (13) durch Stifte (14), die mit Öffnungen (15) der besagten Flächen in Verbindung stehen, gelenkig abnehmbar angeordnet ist.

8. Vorrichtung nach einem der vorherigen Ansprüche, **dadurch gekennzeichnet, dass** das Auffangbehältnis (13) mit einer unter dem Stützelement (10) hervortretenden Ablaufrinne (20) zum Auffangen von Flüssigkeit versehen ist.

9. Vorrichtung nach einem der vorherigen Ansprüche, **dadurch gekennzeichnet, dass** das Flüssigkeitsauffangbehältnis (13) dazu ausgestaltet ist, sobald das Stützelement (10) sich in der ausgefahrenen Position befindet, die durch das Stützelement (10) aufgefangene Flüssigkeit aufzunehmen.

10. Vorrichtung nach Anspruch 9, **dadurch gekennzeichnet, dass** das Stützelement (10) und das Auffangbehältnis (13) einstückig gebildet sind, um eine Schublade zu bilden, die von dem Gehäuse (2) insbesondere durch Gleiten abnehmbar ist.

11. Vorrichtung nach einem der vorherigen Ansprüche, mit einem zweiten Auffangbehältnis (21) zum Auffangen von Kaffeekapseln, wobei das zweite Auffangbehältnis (21) auf das erste Flüssigkeitsauffangbehältnis (13) gesetzt werden kann.

12. Vorrichtung nach einem der vorherigen Ansprüche, **dadurch gekennzeichnet, dass** die nach oben zurückgeschobene Position des Stützelements(10) außerhalb des Gehäuses (2) ist.

13. Vorrichtung (1) nach einem der vorherigen Ansprüche, **dadurch gekennzeichnet, dass** die Vorrichtung dazu ausgebildet ist, auf eine Stützfläche wie zum Beispiel eine Küchentischplatte gestellt werden zu können, welche eine den besagten Freiraum, der ein Positionieren des besagten zweiten Behälters erlaubt, abgrenzende Ablagefläche (11) umfasst.

14. Vorrichtung nach einem der vorherigen Ansprüche, **dadurch gekennzeichnet, dass** sie eine Verriegelungsvorrichtung (23) für das Stützelement (10) in vollständig zurückgeschobener Position umfasst, insbesondere eine derart ausgebildete Verriegelungsvorrichtung (23), dass das Stützelement (10) in der ausgefahrenen Position automatisch gelöst wird und/oder, dass das Stützelement (10) in der zurückgeschobenen Position verriegelt wird, so dass das Stützelement (10) durch Schwerkraft in die ausgefahrenen Position zurückfällt, wenn es von der Verriegelungsvorrichtung (23) gelöst wird und/oder, dass sie durch ein Ein-/Ausschaltmittel (26) gesteuert wird.

15. Vorrichtung nach einem der vorherigen Ansprüche, **dadurch gekennzeichnet, dass** das Stützelement (10) entlang oder in einer Aufnahme (22) des Sockels (2), insbesondere einer Aufnahme, in welcher das Stützelement durch Gleiten eingesteckt wird, verschoben wird.

## Claims

1. Device (1) for preparing beverages comprising a base (2) and a support and droplet recovery system (9) which comprises a collecting tank (13), a support element (10) that can be positioned under a beverage outlet (7) to receive a first container of relatively small size, the support element being movable between a deployed support position suitable for receiving a container of small size and an at least partially pushed back position in which the element is pushed back so as to clear a free space making it possible to position a second container of larger size, in place of the first container, under the beverage outlet (7), **characterized in that** the tank (13) is arranged to recover liquid from the beverage outlet (7) by virtue of the recovery of said liquid by the movable support element (10) in the deployed position, so that said liquid from the beverage outlet recovered by the tank (13) originates from the support element (10).

2. Device according to Claim 1, **characterized in that** the support element (10) is placed overhanging relative to the base (2) in the deployed support position for the first container, the support element (10) comprising in particular a bearing surface (16) intended to provide a bearing to hold the support element in the overhanging deployed position.

3. Device according to Claim 1 or 2, **characterized in that** the support element (10) can be displaced in rotation between the deployed position and the pushed back position.

4. Device according to Claim 3, **characterized in that** the support element (10) is hinged on a rotation axis making it possible to push back said element upwards.

5. Device according to Claim 4, **characterized in that** the support element (10) comprises, on the sides, bearing surfaces (16) placed under the rotation axis, so as to be engaged bearing against the front surfaces (17) of the tank (13).

6. Device according to any one of the preceding claims, **characterized in that** the support element (10) is arranged in a hinged manner to be able to be pushed back at least partially when positioning a container of greater height and to drop back by gravity under the beverage outlet at the moment when the user removes said container.

7. Device according to any one of the preceding claims, **characterized in that** the support element (10) is hinged removably on side faces of the collecting tank (13) by pins (14) that are added into openings (15) in said faces.

8. Device according to any one of the preceding claims, **characterized in that** the recovery tank (13) is provided with a gutter (20) that goes under the support element (10) for the recovery of liquid.

9. Device according to any one of the preceding claims, **characterized in that** the liquid collecting tank (13) is arranged to receive the liquid recovered by the support element (10) at the moment when the latter is positioned in the deployed position.

10. Device according to Claim 9, **characterized in that** the support element (10) and the collecting tank (13) are securely attached to form a drawer which is removable relative to the base (2), in particular by sliding.

11. Device according to any one of the preceding claims, which comprises a second tank (21) for recovering coffee capsules, the second tank being able to be fitted on the first liquid collecting tank (13).

12. Device according to any one of the preceding claims, **characterized in that** the pushed back upwards position of the support element (10) is external to the base (2).

13. Device (1) according to any one of the preceding claims, **characterized in that** it is configured so as to be able to be placed on a support surface, such as a kitchen table surface, comprising a placement surface (11) delimiting said free space making it possible to position said second container.

14. Device according to any one of the preceding claims, **characterized in that** it comprises a locking device (23) for locking the support element (10) in the fully pushed back position, in particular a locking device (23) arranged in such a way as to automatically release the support element (10) in the deployed position and/or arranged in such a way as to lock the support element (10) in the pushed back position so that the support element drops back by gravity into the deployed position once released by the locking device (23) and/or arranged to be controlled by an on/off means (26).

15. Device according to any one of the preceding claims, **characterized in that** the support element (10) is displaced along or in a housing (22) of the base (2), in particular a housing into which the support element is inserted by sliding.
